# FASCICULE DE BREVET EUROPEEN

(11) **EP 1 848 363 B1**
(45) Date de publication et mention de la délivrance du brevet: **11.04.2018**
(21) Numéro de dépôt: 06709468.0
(22) Date de dépôt: 01.02.2006
(51) Int. Cl.: A61C 1/07, A61C 3/03, A61C 1/00

(54) **APPAREIL DE TRAITEMENT DENTAIRE À RECONNAISSANCE AUTOMATIQUE D'INSERT**
ZAHNBEHANDLUNGSVORRICHTUNG MIT AUTOMATISCHER EINSATZERKENNUNG
DENTAL TREATMENT APPARATUS WITH AUTOMATIC INSERT RECOGNITION

(30) Priorité: 02.02.2005 FR 0501050
(43) Date de publication de la demande: 31.10.2007
(73) Titulaire: SOCIETE POUR LA CONCEPTION DES APPLICATIONS DES TECHNIQUES ELECTRONIQUES, 33708 Merignac Cedex (FR)
(72) Inventeur: REGERE, Pascal, 33290 Blanquefort (FR); DIERAS, Francis, 33000 Bordeaux (FR)
(74) Mandataire: Healy, Erwan
(86) Numéro de dépôt international: PCT/FR2006/050085
(87) Numéro de publication internationale: WO 2006/082340

(56) Documents cités:
- EP-A2- 1 369 185
- DE-A1- 3 708 801
- DE-A1- 19 733 501
- US-A1- 2004 063 064
- US-A1- 2004 255 409
- US-B1- 6 503 081

## Description

### Arrière plan de l'invention

La présente invention concerne les appareils de traitement dentaire et plus particulièrement les appareils à ultrasons, tels que les appareils de détartrage, de surfaçage (élimination de biofilms) ou de taille (cavités ou préparations de prothèse), qui comprennent des instruments vibrant à des fréquences ultrasonores.

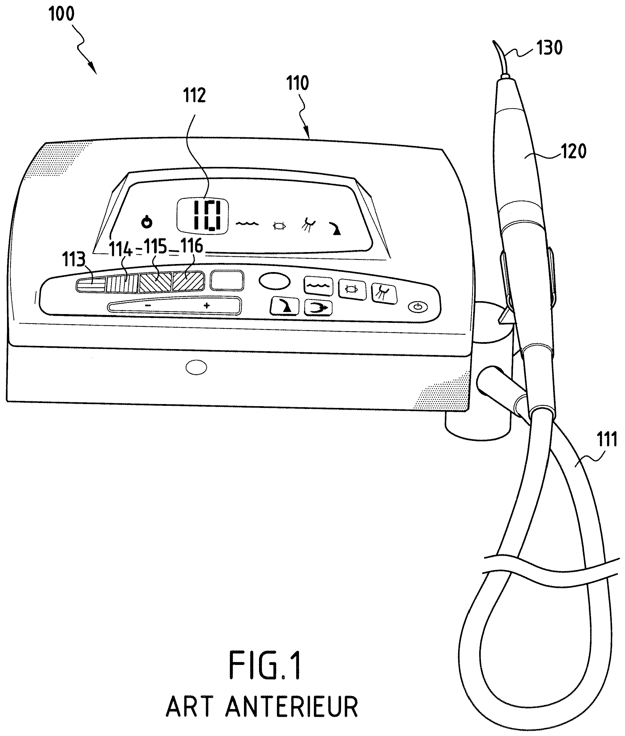

La figure 1 illustre un appareil de traitement à ultrasons 100 qui comprend un générateur d'ultrasons 110 relié à une pièce à main 120 par un cordon 111. Une sonotrode ou insert ultrasonique 130 est monté sur la partie supérieure de la pièce à main 120. De façon bien connue, la pièce à main 120 comprend un transducteur (non représenté) formé par exemple d'un matériau piézoélectrique et couplé mécaniquement à l'insert 130 de manière à transmettre à ce dernier des ondes vibratoires dont l'amplitude est déterminée en fonction de la puissance fournie par le générateur d'ultrasons 110.

L'insert est une pièce interchangeable qui présente une grande variété de formes suivant le traitement auquel elle est destinée. Des exemples de tels inserts sont décrits notamment dans les documents US 6 312 256 et US 4 283 175. L'amplitude ou la puissance des ondes ultrasonores transmises par le générateur dépend aussi du type de traitement que l'on souhaite pratiquer. Par exemple, pour un débridement parodontal, la puissance/amplitude requise est nettement inférieure à celle nécessaire pour un détartrage. En outre, le type d'insert utilisé peut être différent en fonction du traitement à réaliser. Par conséquent, pour chaque type de traitement dentaire, il existe une ou plusieurs familles d'inserts qui sont destinés à fonctionner dans une plage déterminée de puissance et d'amplitude des ondes ultrasonores.

Par conséquent, les appareils de traitement dentaire comprennent un générateur d'ultrasons dont la puissance peut être réglée en fonction du traitement pratiqué et/ou de l'insert utilisé. Afin de faciliter l'usage de tels appareils pour les praticiens, les générateurs d'ultrasons sont équipés par exemple de touches 113 à 116 permettant de sélectionner automatiquement la plage de puissance adaptée au traitement. Ces touches sont repérées par un code de couleur ou équivalent qui permet au praticien de sélectionner la plage de puissance adaptée qui, une fois sélectionnée peut être indiquée sur un écran 112.

Toutefois, comme expliqué plus haut, on utilise aussi des inserts spécifiques pour chaque traitement qui sont destinés à fonctionner dans une des plages de puissance préréglées sur l'appareil. Par conséquent, le praticien doit également contrôler que l'insert placé sur la pièce à main est bien adapté à la plage de puissance sélectionnée ou, inversement, sélectionner la plage de puissance correspondant à l'insert monté sur la pièce à main.

A cet effet, une des solutions connues consiste à conditionner chaque insert sur un élément de support distinctif. L'élément support comprend un marquage en correspondance avec celui des touches de sélection des plages de puissances. Par exemple, si les touches sont repérées avec un code de couleur, les supports présentent chacun un code de couleur correspondant à celui de la touche permettant de sélectionner la plage de puissance optimale pour l'insert placé sur ce support.

Une autre solution consiste à marquer directement l'insert avec un code de couleur ou similaire permettant le repérage par le praticien de la plage de puissance d'utilisation de l'insert. Ce type de marquage d'insert est décrit dans le document FR 04 06630.

Cependant, quel que soit le mode de repérage utilisé, la sélection de la plage de puissance sur le générateur d'ultrasons nécessite l'intervention du praticien, ce qui complique l'utilisation de l'appareil de traitement dentaire pour ce dernier et n'élimine pas les risques d'une mauvaise sélection de la plage de puissance sur le générateur.

Le document US 6 503 081 décrit un appareil à ultrasons comprenant une pièce à main équipée d'un élément magnétostrictif relié à un générateur d'ultrasons. Le générateur d'ultrasons comprend des moyens de traitement programmés pour appliquer, à l'élément magnétostrictif de la pièce à main munie d'un insert, une série de signaux de fréquence variable et détecter, par mesure de consommation de l'élément magnétostrictif, la fréquence correspondant à la fréquence de résonance de la pièce à main munie de l'insert. Les moyens de traitement ajustent ensuite le générateur sur la fréquence de résonance détectée. Cependant, si ce document divulgue une solution pour détecter et régler le générateur d'ultrasons sur la fréquence de résonance de l'insert monté sur la pièce à main, il ne permet pas d'identifier le type d'insert monté sur la pièce à main. Sans une reconnaissance propre de l'insert, il n'est pas possible de régler le générateur sur une plage de puissance et d'amplitude adaptée au type d'insert monté sur la pièce à main.

Les documents DE 37 08 801, DE 197 33 501, DE 197 33 501, US 2004/255409 et US 2004/063064 décrivent aussi des appareils à ultrasons connus.

### Objet et résumé de l'invention

La présente invention a pour but de remédier aux inconvénients précités et de proposer une solution qui évite toute intervention du praticien lors du réglage de la plage de puissance et d'amplitude du générateur d'ultrasons suivant le type d'insert utilisé.

Ce but est atteint grâce à un appareil de traitement dentaire à ultrasons comprenant au moins une pièce à main chirurgicale équipée d'un transducteur relié à un générateur d'ultrasons, ladite pièce à main étant destinée à recevoir des inserts ultrasoniques destiné à être couplés mécaniquement au transducteur de façon interchangeable et fonctionnant dans des plages de puissance et d'amplitude d'ondes ultrasonores différentes en fonction du type d'insert ultrasonique, caractérisé en ce qu'il comprend une table de correspondance dans laquelle sont enregistrées les plages de puissance et d'amplitude d'utilisation pour chaque insert, des moyens pour reconnaître automatiquement le type d'insert monté sur la pièce à main, et des moyens de traitement pour, en réponse à la reconnaissance du type d'insert, régler le générateur d'ultrasons sur la plage de puissance et d'amplitude adaptée au type d'insert reconnu en utilisant ladite plage s'étendant entre une limite inférieure et une limite supérieure délimitant les valeurs de puissance et d'amplitude respectivement minimale et maximale d'utilisation de l'insert reconnu. Ainsi, l'appareil de traitement dentaire selon l'invention est capable de reconnaître automatiquement le type d'insert qui est monté sur la pièce à main et de régler en réponse son générateur d'ultrasons sur une plage de puissance et d'amplitude suivant le type d'insert reconnu. Le type d'insert est détecté par lecture (optique ou radiofréquence) d'un code d'identification ou par analyse du signal de réponse du transducteur de la pièce à main. Chaque code d'identification ou signal de réponse correspond à une plage de puissance et d'amplitude propre qui est mémorisée dans l'appareil, ce qui permet aux moyens de traitement dudit appareil de régler automatiquement le générateur d'ultrasons sur la plage de puissance et d'amplitude correspondant au type d'insert détecté.

Le praticien n'a plus à intervenir pour le réglage de la plage de puissance et d'amplitude d'utilisation de l'insert. L'utilisation de l'appareil est, par conséquent, simplifiée et le risque d'erreur dans la sélection de la plage de puissance et d'amplitude d'ondes ultrasoniques fournies par le générateur est éliminé. Après reconnaissance de l'insert, l'appareil de l'invention se cale automatiquement dans une plage de puissance et d'amplitude délimitant une valeur de puissance et d'amplitude minimale en dessous de laquelle l'insert ne fonctionne plus efficacement et une valeur de puissance et d'amplitude maximale au-delà de laquelle la résistance de l'insert peut être affectée. Cela permet au praticien d'évoluer (i.e. d'utiliser l'insert) à l'intérieur d'une plage de puissance et d'amplitude qui lui garantit une alimentation en puissance et en amplitude à la fois toujours suffisante pour utiliser efficacement l'insert et jamais trop importante pour ne pas risquer d'endommager celui-ci. L'appareil de l'invention offre ainsi au praticien une sécurité et un confort d'utilisation accrus.

Selon un mode de réalisation de l'invention, l'appareil comprend des moyens de lecture optique pour lire un code, tel qu'un code-barre, sur l'insert correspondant au type de l'insert et permettant de déterminer la plage de puissance et d'amplitude d'ondes ultrasonores dans laquelle l'insert est destiné à fonctionner.

Selon un autre mode de réalisation de l'invention, l'appareil comprend des moyens de lecture radiofréquence, tel qu'un lecteur RFID, pour lire un code mémorisé dans l'insert correspondant au type de l'insert et permettant de déterminer la plage de puissance et d'amplitude d'ondes ultrasonores dans laquelle l'insert est destiné à fonctionner.

Selon encore un autre mode de réalisation de l'appareil de traitement dentaire selon l'invention, ce dernier comprend des moyens pour envoyer un signal de mesure électronique au transducteur couplé mécaniquement à un insert et des moyens pour mesurer et analyser le signal de réponse du transducteur, ledit signal de réponse comprenant des informations correspondant au type de l'insert et permettant de déterminer la plage de puissance et d'amplitude d'ondes ultrasonores dans laquelle l'insert est destiné à fonctionner.

Cette analyse de signal peut être fréquentielle. Dans ce cas, l'appareil comprend un wobulateur pour envoyer au transducteur un signal de mesure à une fréquence déterminée et des moyens de traitement pour analyser le signal de réponse du transducteur de manière à déterminer au moins un des paramètres suivants du signal de réponse: fréquence de résonance, phase, puissance et impédance, un ou plusieurs de ces paramètres correspondant au type de l'insert et permettant de déterminer la plage de puissance et d'amplitude d'ondes ultrasonores dans laquelle l'insert couplé au transducteur est destiné à fonctionner.

L'analyse du signal de réponse du transducteur peut être aussi temporelle. Dans ce cas, l'appareil comprend des moyens pour envoyer un signal d'impulsion (ex. impulsion de Dirac) au transducteur et des moyens de traitement pour analyser le signal de réponse temporelle du transducteur, ledit signal de réponse temporelle (signature de l'insert) correspondant au type d'insert monté sur la pièce à main qui permet de déterminer la plage de puissance et d'amplitude d'ondes ultrasonores dans laquelle l'insert couplé au transducteur est destiné à fonctionner. Un insert ultrasonique destiné à être monté sur une pièce à main chirurgicale d'un appareil de traitement dentaire à ultrasons selon l'invention, comprend des moyens pour identifier automatiquement la plage de puissance et d'amplitude d'ondes ultrasonores dans laquelle l'insert est destiné à fonctionner, ladite plage s'étendant entre une limite inférieure et une limite supérieure délimitant les valeurs de puissance et d'amplitude respectivement minimale et maximale d'utilisation de l'insert détecté.

L'insert peut comporter un code-barre inscrit son embase ou un transpondeur (RFID) permettant à l'appareil de traitement dentaire à ultrasons de reconnaître le type de l'insert et de sélectionner automatiquement la plage de puissance et d'amplitude d'ondes ultrasonores dans laquelle l'insert est destiné à fonctionner.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'un appareil de chirurgie dentaire à ultrasons,
- la figure 2 est une vue schématique d'un appareil de chirurgie dentaire à ultrasons conformément à un premier mode de réalisation de l'invention,
- les figures 3A et 3B sont des vues schématiques en perspective montrant la pièce à main et le connecteur du cordon du générateur d'ultrasons de la figure 2,
- la figure 4 est un schéma fonctionnel de l'appareil de la figure 2,
- la figure 5 représente des exemples de codage pouvant être inscrits sur l'insert utilisé dans le premier mode de réalisation de l'appareil selon l'invention,
- la figure 6 est une vue schématique d'un appareil de chirurgie dentaire à ultrasons conformément à un deuxième mode de réalisation de l'invention,
- la figure 7 est une vue en coupe longitudinale d'une partie de la pièce à main du connecteur du cordon du générateur d'ultrasons de l'appareil de la figure 6,
- la figure 8 est un schéma fonctionnel d'un troisième mode de réalisation d'un appareil de traitement dentaire à ultrasons conformément à l'invention, et
- la figure 9 est un schéma fonctionnel d'un quatrième mode de réalisation d'un appareil de traitement dentaire à ultrasons conformément à l'invention.

### Description détaillée des modes de réalisation de l'invention

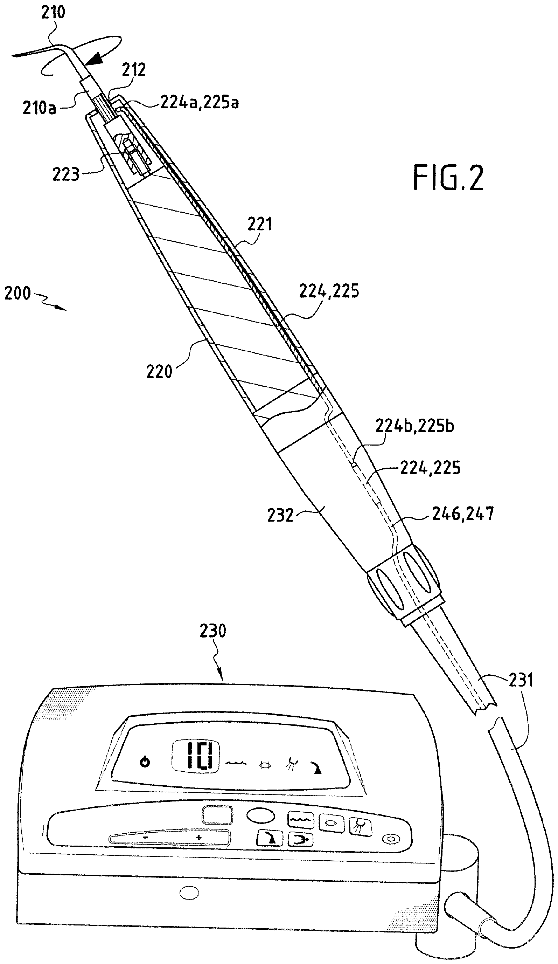

La figure 2 illustre un appareil de traitement dentaire à ultrasons 200 conformément à un premier mode de réalisation de l'invention. L'appareil 200 est constitué d'une pièce à main 220 munie d'un insert 210 et reliée à un générateur d'ultrasons 230 au moyen d'un cordon 231.

L'appareil à ultrasons selon ce mode de réalisation comprend des moyens pour détecter optiquement le type d'insert permettant de déterminer la plage de puissance et d'amplitude dans laquelle l'insert doit être utilisé. A cet effet, comme représenté en figure 1, l'appareil utilise un insert 210 qui comporte un code-barre 212 disposé autour de son embase 210a. De façon connue, l'insert est couplé mécaniquement de façon rigide avec le transducteur (non représenté) d'une pièce à main 220 en le vissant sur un élément 223 solidaire du transducteur (non représenté) de la pièce à main 220. Deux fibres optiques 224 et 225 sont disposées côte à côte dans le corps 221 de la pièce à main. Les fibres 224 et 225 sont par exemple moulées dans le corps 221. Les extrémités 224a et 225a respectivement des fibres optiques 224 et 225 débouchent du corps 221 au niveau de l'embase 210a de l'insert 210 dans une position perpendiculaire à la surface de l'embase de manière à faire défiler le code-barre 212 de l'insert devant ces extrémités lors de son vissage sur la pièce à main.

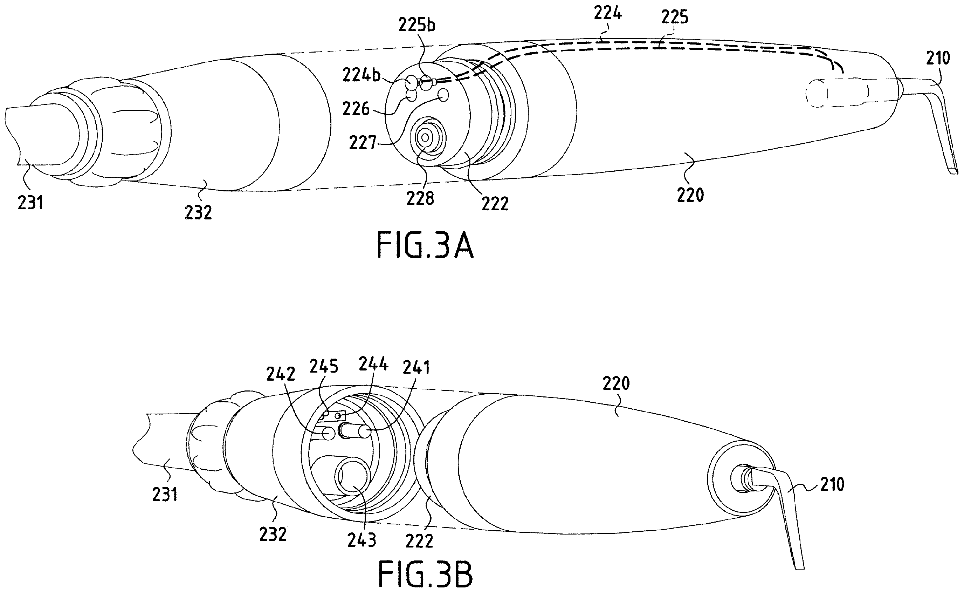

Comme illustré sur la figure 3A, les autres extrémités 224b et 225b des fibres 224 et 225 débouchent au niveau du fond du connecteur 222 de la pièce à main 220 à proximité de deux fiches femelles 226, 227 et d'un conduit d'irrigation 228. Comme illustré sur la figure 3B, les extrémités 224b et 225b des fibres 224 et 225, les fiches femelles 226 et 227, et le conduit 228 coopèrent chacun respectivement avec une diode électroluminescente 244 ou tout autre composant émetteur de lumière, un photodétecteur (diode, transistor, etc.) 245, deux fiches mâles 241 et 242 et un conduit 243, tous ces éléments étant disposés à l'intérieur d'un connecteur 232 relié à une extrémité du cordon 231 et dans lequel s'engage le connecteur 222 de la pièce à main.

Le transducteur de la pièce à main est branché au générateur d'ultrasons 230 par engagement des fiches 226 et 227 respectivement dans les fiches 241 et 242. Le conduit d'irrigation 228 est alimenté en liquide par le conduit 243. Le fonctionnement de ces éléments est bien connu en soi et ne sera décrit plus en détail.

La diode 244 est reliée au générateur à ultrasons 230 par un conducteur 246 logé dans le cordon 231 et le photodétecteur 245 est relié au générateur à ultrasons 230 par un conducteur 247 logé dans le cordon 231 (figure 2). Ces deux éléments sont de préférence placés dans le connecteur 232 du cordon 231 pour les protéger des cycles d'autoclavage auxquels est soumis la pièce à main. Seules les fibres optiques 224 et 225 doivent être en un matériau résistant aux conditions de température et d'humidité rencontrées lors des autoclavages.

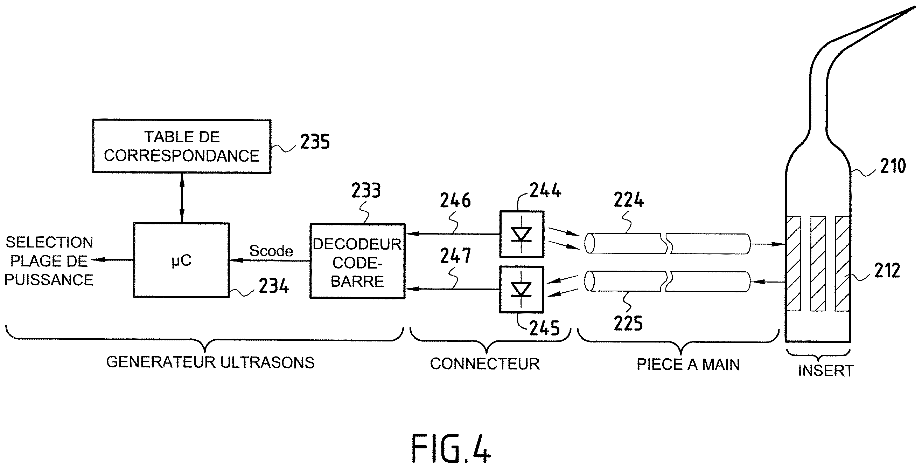

La figure 4 représente schématiquement les éléments qui interviennent lors de la reconnaissance optique de l'insert et de la sélection automatique de la plage de puissance suivant ce premier mode de réalisation. Le générateur d'ultrasons 230 comprend un décodeur de code-barre 233 dont le fonctionnement est bien connu. Ce décodeur transmet à la diode électroluminescente 244 un signal d'émission via le conducteur 246. La diode 244 émet alors un signal optique modulé ou continu qui se propage dans la fibre optique 224 pour éclairer à sa sortie le code-barre 212 inscrit sur l'embase de l'insert. La lumière réfléchie est transmise au photodétecteur 245 par l'intermédiaire de la fibre 225. Le photodétecteur 245 convertit le signal optique reçu en signal électrique et le transmet au décodeur 233 via le conducteur 247.

Suivant le principe connu du code-barre, l'intensité de lumière réfléchie par l'insert et, par conséquent, le signal transmis par le photodétecteur est fonction de la zone éclairée de l'insert. Plus précisément, ce signal est minimal lorsqu'une barre noire se trouve en face de la fibre 225 et devient maximal en l'absence d'une telle barre, l'insert présentant alors (entre deux barres) une zone brillante très réfléchissante. Ainsi, le signal reçu pendant le vissage de l'insert 210 sur la pièce à main 220 est une salve d'impulsion correspondant au codage inscrit sur l'insert.

Le temps mesuré entre chaque impulsion ainsi que la largeur (i.e. temps) de ces impulsions permet au décodeur 233 de déduire le code inscrit sur l'insert. Toutefois, la vitesse de vissage peut varier d'un utilisateur à un autre ou varier dans le temps pour un même utilisateur. Afin d'éviter une lecture erronée du code, le décodeur 233 décode de préférence les informations à partir du rapport t1/t2 qui correspond au rapport entre le temps t1 de chaque impulsion et le temps t2 entre chaque impulsion et qui reste constant quelle que soit la vitesse de serrage de l'insert. Des exemples de codage utilisant un tel rapport sont donnés en figue 5.

Une fois les informations inscrites sur l'insert décodées, le décodeur 232 transmet ces dernières à des moyens de traitement 234 (ex. microcontrôleur) sous la forme d'un signal Scode qui peut par exemple correspondre à des caractères ASCII. Les moyens de traitement 234 sont spécifiquement programmés pour sélectionner dans le générateur d'ultrasons la plage de puissance d'utilisation correspondant à l'insert identifié, en interrogant une table de correspondance ou abaque 235 dans laquelle sont enregistrées les plages de puissance d'utilisation pour chaque type d'insert.

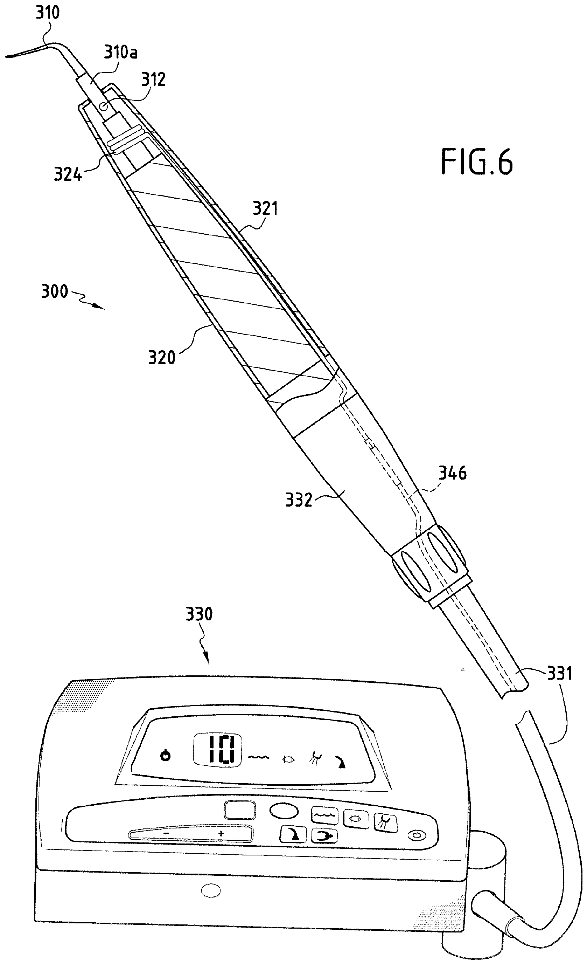

La figure 6 représente un appareil de traitement à ultrasons 300 conformément à un deuxième mode de réalisation de l'invention et qui est constitué d'une pièce à main 320 munie d'un insert 310 et reliée à un générateur d'ultrasons 330 au moyen d'un cordon 331.

L'appareil à ultrasons selon ce mode de réalisation détecte par radiofréquence la plage de puissance et d'amplitude dans laquelle l'insert doit être utilisé. A cet effet, comme représenté en figure 1, l'appareil utilise un insert 310 qui comprend dans son embase 310a un transpondeur 312. Le transpondeur 312 peut être un composant miniature utilisant la technologie d'identification par fréquence radio connue sous la dénomination "RFID" (radio frequency identification). De façon bien connue, ce type de composant est un circuit passif qui comprend un résonateur type LC (antenne) apte à capter un champ électromagnétique à une fréquence donnée pour alimenter le composant. Ce champ magnétique est généré à partir d'une antenne solénoïde 324 disposée (ex. moulée) dans le corps 321 de la pièce à main 320.

Une fois qu'il est alimenté, le circuit renvoie en réponse un signal radio contenant un code préprogrammé. Ce code génère une modulation de fréquence par la fluctuation de la capacité du résonateur LC, ce qui a pour effet de déplacer la fréquence de résonance autour de la fréquence porteuse. L'antenne solénoïde 324 est reliée à un condensateur (non représenté) pour former un circuit émetteur/récepteur de type LC qui détecte cette variation de fréquence par fluctuation de l'énergie absorbée. Ce signal de fluctuation est alors transmis à des moyens de traitement (ex. microcontrôleur) du générateur d'ultrasons 330 par l'intermédiaire d'un conducteur 346 logé dans le cordon 331. Les moyens de traitement sont programmés pour convertir les fluctuations du signal reçu en données binaire et pour comparer ces données avec celles enregistrées dans une table de correspondance dans laquelle sont enregistrées les plages de puissance et d'amplitude d'utilisation pour chaque type d'insert comme dans l'appareil du premier mode de réalisation décrit précédemment. Une fois le type d'insert reconnu, les moyens de traitement règlent le générateur d'ultrasons sur la plage de puissance et d'amplitude adaptée à l'insert monté sur la pièce à main. Comme décrit précédemment pour la reconnaissance par code-barre, les moyens de traitement du générateur d'ultrasons sont spécifiquement programmés pour régler ce dernier sur la plage de puissance et d'amplitude d'utilisation correspondant à l'insert identifié, par exemple en interrogant une table de correspondance ou abaque dans laquelle sont enregistrées les plages de puissance d'utilisation pour chaque type d'insert.

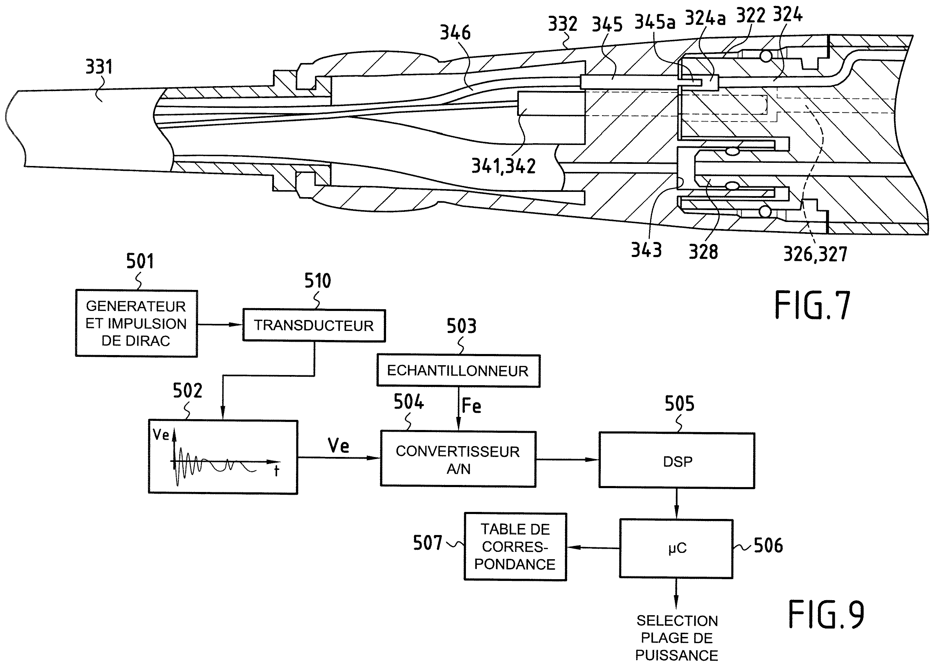

Comme illustré sur la figure 7, l'extrémité 324a de l'antenne solénoïde 324 débouche au niveau du fond connecteur 322 de la pièce à main 320 à proximité de deux fiches femelles 326, 327 d'alimentation du transducteur et d'un conduit d'irrigation 328 qui coopèrent respectivement avec deux fiches mâles 341 et 342 et un conduit 343, tous ces éléments étant disposés à l'intérieur d'un connecteur 332 relié à une extrémité du cordon 331 et dans lequel s'engage le connecteur 322 de la pièce à main. L'extrémité 324a de l'antenne solénoïde forme par exemple une fiche femelle dans laquelle s'engage une fiche mâle 345a formée à l'extrémité du conducteur 346. L'extrémité du conducteur 346 peut en outre comprendre une portion 345 incluant la capacité du circuit émetteur LC et un transistor de puissance (non représenté). L'agencement de ces composants au niveau du connecteur 332 du cordon 331 permet de limiter les pertes et les perturbations dans ce dernier. Le circuit ainsi formée a un double rôle: il alimente en énergie le transpondeur 312 de l'insert et détecte le signal codé émis en réponse. Selon une variante de réalisation, l'antenne solénoïde peut être disposée en dehors de la pièce à main démontable, par exemple au niveau du connecteur 332 du cordon 331 en adaptant la géométrie de l'antenne et la fréquence du champ électromagnétique généré.

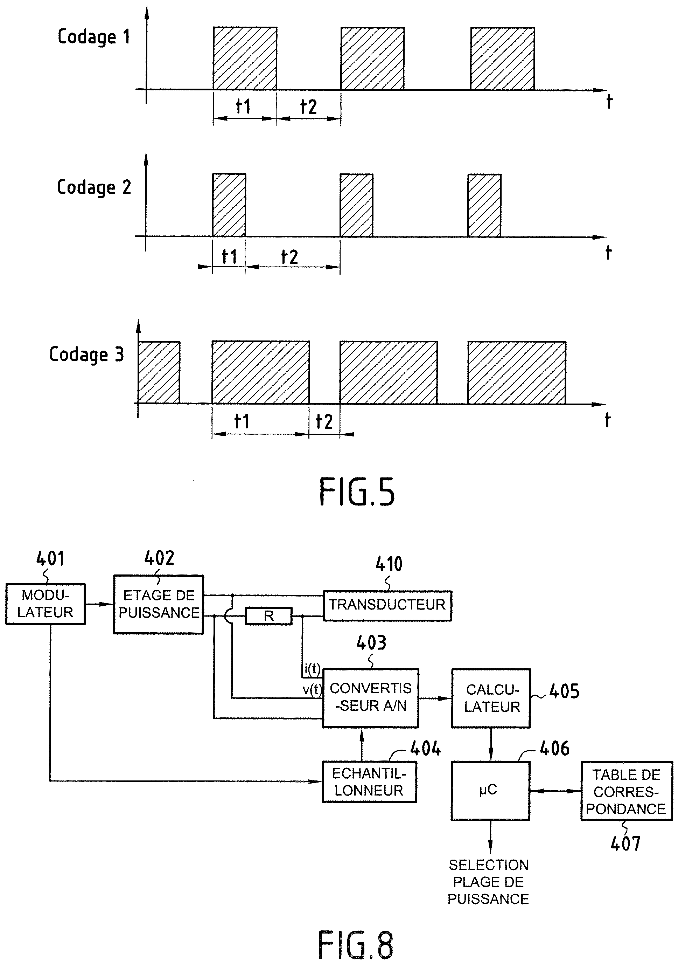

On décrit maintenant en relation avec la figure 8 un troisième mode de réalisation de l'appareil à ultrasons qui conformément à l'invention permet la reconnaissance automatique du type d'insert montée sur la pièce à main et la sélection automatique de la plage de puissance correspondante sur le générateur d'ultrasons. Dans ce mode de réalisation, la reconnaissance du type d'insert est réalisée par analyse fréquentielle d'un signal électronique fourni au transducteur 410 de la pièce à main. A cet effet, on utilise un wobulateur en fréquence 401 qui génère un signal autour de la fréquence de résonance de l'ensemble formé par le transducteur et l'insert monté sur la pièce à main. Le courant i(t) et la tension v(t) aux bornes du transducteur sont prélevées et converties en un signal numérique par un convertisseur analogique/numérique 403. Le signal numérique est ensuite transmis à un calculateur 405 qui permet de trouver les fréquences de résonance du transducteur (modes), sa phase, sa puissance et son impédance. Ces informations sont utilisées par des moyens de traitement 406 pour retrouver le type d'insert en utilisant une table de correspondance 407 dans laquelle sont enregistrées les types d'insert correspondant à ces informations ainsi que les plages de puissance et d'amplitude pour chacun des types d'insert répertoriés. Tous les éléments nécessaires à cette analyse fréquentielle peuvent être compris dans le générateur d'ultrasons, c'est-à-dire en dehors de la pièce à main démontable.

Suivant un quatrième mode de réalisation illustré schématiquement à la figure 9, la reconnaissance automatique du type d'insert montée sur la pièce à main et la sélection automatique de la plage de puissance correspondante peut être réalisée par analyse temporelle. Dans ce cas, on utilise un générateur d'impulsion de Dirac 501 pour analyser la réponse du transducteur 510 à une impulsion de Dirac à l'aide d'un processeur de signal numérique (DSP) 505. Le signal de réponse 502 du transducteur est prélevé puis échantillonné au moyen d'un convertisseur analogique/numérique 504 associé à un échantillonneur 503. Les valeurs numériques sont stockées en mémoire. Le processeur de signal numérique 505 effectue un traitement numérique de ces valeurs afin d'en extraire l'information du signal pertinente, à savoir la signature temporelle de l'insert. Cette signature est ensuite transmise à des moyens de traitement 506 programmés pour déterminer le type d'insert correspondant à la signature mesurée en utilisant une table de correspondance permettant de retrouver les types d'insert en fonction de leur signature temporelle. La table de correspondance contient en outre les valeurs des plages de puissance et d'amplitude à utiliser en fonction de chaque type d'insert, ce qui permet aux moyens de traitement 506 de commander le générateur d'ultrasons pour qu'il se règle sur la plage de puissance adaptée pour l'insert.

Les analyses fréquentielles et temporelles respectivement réalisées selon le troisième et le quatrième modes de réalisation décrits ci-dessus peuvent être éventuellement réalisées l'une après l'autre dans un même appareil à ultrasons. Cela permet de disposer d'informations complémentaires sur l'insert monté sur la pièce à main et d'accroître la précision de reconnaissance automatique de l'insert.

Quelque soit le mode de détection de l'insert utilisé (code-barre, radiofréquence, analyses fréquentielles et temporelles), les moyens de traitement règlent automatiquement le générateur d'ultrasons sur une plage de puissance et d'amplitude déterminée et adaptée à l'utilisation de l'insert. Il est connu qu'un même insert peut fonctionner à des valeurs de puissance et d'amplitude différentes en fonction du traitement à appliquer (ex. un même insert peut être utilisé à la fois pour réaliser un détartrage et un débridement) ou du cas à traiter (ex. en fonction de la nature et/ou de la quantité de matière à enlever). Conformément à l'invention, le praticien a la possibilité de commander le générateur (par exemple avec des touches de sélection sur le générateur) pour appliquer des valeurs de puissance et d'amplitude variables à l'insert mais uniquement à l'intérieur de la plage automatiquement sélectionnée après la reconnaissance de l'insert. De cette manière, le praticien est assuré d'appliquer pendant le traitement des valeurs de puissance et d'amplitude toujours suffisantes au fonctionnement efficace de l'insert (limite inférieure de la plage) et jamais trop élevées vis-à-vis de la résistance propre de l'insert (limite supérieure de la plage).

Les solutions utilisées dans le troisième et le quatrième modes de réalisation de l'appareil à ultrasons de l'invention présente un avantage supplémentaire par rapport au premier et au deuxième modes de réalisation en ce qu'il ne nécessitent pas de modification de l'insert (i.e. pas de codes-barres ou transpondeur). En effet, tous les moyens nécessaires aux analyses (fréquentielles ou temporelles) sont compris dans le générateur d'ultrasons, ce qui permet de détecter des inserts classiques, leur réponse (fréquentielle ou temporelle) étant spécifique de leur structure.

## Revendications

1. Appareil (200, 300) de traitement dentaire à ultrasons comprenant au moins une pièce à main chirurgicale (220, 320) équipée d'un transducteur (410, 510) relié à un générateur d'ultrasons (230, 330), ladite pièce à main (220, 320) étant destinée à recevoir des inserts ultrasoniques (210) destinés à être couplés mécaniquement au transducteur (410) de façon interchangeable et fonctionnant dans des plages de puissance et d'amplitude d'ondes ultrasonores différentes en fonction du type d'insert ultrasonique (210, 310),
**caractérisé en ce qu'**il comprend une table de correspondance (235, 407, 507) dans laquelle sont enregistrées les plages de puissance et d'amplitude d'utilisation pour chaque type d'insert (210, 310), des moyens pour reconnaître automatiquement le type d'insert (210, 310) monté sur la pièce à main (220, 320), et des moyens de traitement pour, en réponse à la reconnaissance du type d'insert (210, 310), régler le générateur d'ultrasons (230) sur la plage de puissance et d'amplitude adaptée au type d'insert (210, 310) reconnu en utilisant ladite plage s'étendant entre une limite inférieure et une limite supérieure délimitant les valeurs de puissance et d'amplitude respectivement minimale et maximale d'utilisation de l'insert (210, 310) reconnu.

2. Appareil (200) selon la revendication 1, **caractérisé en ce qu'**il comprend des moyens de lecture optique pour lire un code sur l'insert (210) correspondant à la plage de puissance et d'amplitude d'ondes ultrasonores dans laquelle l'insert (210) est destiné à fonctionner.

3. Appareil (200) selon la revendication 2, **caractérisé en ce qu'**il comprend les moyens de lecture de codes-barres (212).

4. Appareil (300) selon la revendication 1, caractérisé en qu'il comprend des moyens (324) de lecture radiofréquence pour lire un code mémorisé dans l'insert, ledit code correspondant à la plage de puissance et d'amplitude d'ondes ultrasonores dans laquelle l'insert (310) est destiné à fonctionner.

5. Appareil (300) selon la revendication 4, **caractérisé en ce qu'**il comprend des moyens (324) de lecture de puces RFID (312).

6. Appareil (200) selon la revendication 1, **caractérisé en ce qu'**il comprend des moyens pour envoyer un signal de mesure électronique au transducteur (410, 510) couplé mécaniquement à un insert (210, 310) et des moyens pour mesurer et analyser le signal de réponse du transducteur (410, 510), ledit signal de réponse comprenant des informations correspondant à la plage de puissance et d'amplitude d'ondes ultrasonores dans laquelle l'insert (210, 310) est destiné à fonctionner.

7. Appareil (200, 300) selon la revendication 6, **caractérisé en ce qu'**il comprend un wobulateur (401) pour envoyer au transducteur un signal de mesure à une fréquence déterminée et des moyens de traitement (405) pour analyser le signal de réponse du transducteur de manière à déterminer au moins un des paramètres suivants du signal de réponse: fréquence de résonance, phase, puissance et impédance, un ou plusieurs de ces paramètres correspondant à la plage de puissance et d'amplitude d'ondes ultrasonores dans laquelle l'insert (210, 310) couplé au transducteur (410, 510) est destiné à fonctionner.

8. Appareil (200, 300) selon la revendication 6 ou 7, **caractérisé en ce qu'**il comprend des moyens (501) pour envoyer un signal d'impulsion au transducteur (510) et des moyens de traitement (505) pour analyser le signal de réponse temporelle du transducteur (510), ledit signal de réponse temporelle correspondant à la plage de puissance et d'amplitude d'ondes ultrasonores dans laquelle l'insert couplé au transducteur est destiné à fonctionner.

## Patentansprüche

1. Ultraschall-Zahnbehandlungsvorrichtung (200, 300), umfassend mindestens ein chirurgisches Handstück (220, 320), das mit einem Wandler (410, 510) ausgestattet ist, der mit einem Ultraschallgenerator (230, 330) verbunden ist, wobei das Handstück (220, 320) dazu bestimmt ist, Ultraschalleinsätze (210) aufzunehmen, die dazu bestimmt sind, mit dem Wandler (410) austauschbar mechanisch verbunden zu werden, und in unterschiedlichen Leistungs- und Amplitudenbereichen von Ultraschallwellen in Abhängigkeit von der Art des Ultraschalleinsatzes (210, 310) zu funktionieren,
**dadurch gekennzeichnet, dass** sie eine Entsprechungstabelle (235, 407, 507), in der die Leistungs- und Amplitudenbereiche der Verwendung für jede Art von Einsatz (210, 310) aufgezeichnet sind, Mittel zum automatischen Erkennen der Art des Einsatzes (210, 310), der an dem Handstück (220, 320) angebracht ist, und Verarbeitungsmittel aufweist, um als Antwort auf die Erkennung der Art des Einsatzes (210, 310) den Ultraschallgenerator (230) auf dem Leistungs- und Amplitudenbereich einzustellen, der für die erkannte Art des Einsatzes (210, 310) geeignet ist, indem der Bereich verwendet wird, der sich zwischen einer Untergrenze und einer Obergrenze erstreckt, die jeweils den minimalen und maximalen Leistungs- und Amplitudenwert der Verwendung des erkannten Einsatzes (210, 310) begrenzen.

2. Vorrichtung (200) gemäß Anspruch 1, **dadurch gekennzeichnet, dass** sie optische Lesemittel zum Lesen eines Codes auf dem Einsatz (210) aufweist, der dem Leistungs- und Amplitudenbereich von Ultraschallwellen entspricht, in dem der Einsatz (210) bestimmt ist, zu funktionieren.

3. Vorrichtung (200) gemäß Anspruch 2, **dadurch gekennzeichnet, dass** sie Strichcode-Lesemittel (212) aufweist.

4. Vorrichtung (300) gemäß Anspruch 1, **dadurch gekennzeichnet, dass** sie Radiofrequenzlesemittel (324) zum Lesen eines Codes, der in dem Einsatz gespeichert ist, aufweist, wobei der Code dem Leistungs- und Amplitudenbereich von Ultraschallwellen entspricht, in dem der Einsatz (310) bestimmt ist, zu funktionieren.

5. Vorrichtung (300) gemäß Anspruch 4, **dadurch gekennzeichnet, dass** sie Mittel (324) zum Lesen von RFID-Chips (312) aufweist.

6. Vorrichtung (200) gemäß Anspruch 1, **dadurch gekennzeichnet, dass** sie Mittel zum Senden eines elektronischen Messsignals an den Wandler (410, 510), der mechanisch mit einem Einsatz (210, 310) verbunden ist, und Mittel zum Messen und Analysieren des Antwortsignals des Wandlers (410, 510) aufweist, wobei das Antwortsignal Informationen aufweist, die dem Leistungs- und Amplitudenbereich von Ultraschallwellen entsprechen, in dem der Einsatz (210, 310) bestimmt ist, zu funktionieren.

7. Vorrichtung (200, 300) gemäß Anspruch 6, **dadurch gekennzeichnet, dass** sie einen Wobbelgenerator (401), um ein Messsignal mit einer bestimmten Frequenz an den Wandler zu senden, und Verarbeitungsmittel (405) aufweist, um das Antwortsignal des Wandlers derart zu analysieren, um mindestens einen der folgenden Parameter des Antwortsignals zu bestimmen: Resonanzfrequenz, Phase, Leistung und Impedanz, wobei einer oder mehrere dieser Parameter dem Leistungs- und Amplitudenbereich von Ultraschallwellen entspricht, in dem der Einsatz (210, 310), der mit dem Wandler (410, 510) verbunden ist, bestimmt ist, zu funktionieren.

8. Vorrichtung (200, 300) gemäß Anspruch 6 oder 7, **dadurch gekennzeichnet, dass** sie Mittel (501) zum Senden eines Impulssignals an den Wandler (510) und Verarbeitungsmittel (505) zum Analysieren des Signals des Zeitverhaltens des Wandlers (510) aufweist, wobei das Signal des Zeitverhaltens dem Leistungs- und Amplitudenbereich von Ultraschallwellen entspricht, in dem der Einsatz, der mit dem Wandler verbunden ist, bestimmt ist, zu funktionieren.

## Claims

1. An ultrasound dental treatment appliance (200, 300) comprising at least one surgical handpiece (220, 320) fitted with a transducer (410, 510) connected to an ultrasound generator (230, 330), said handpiece (220, 320) being designed to receive ultrasound inserts (210) designed to be mechanically coupled to the transducer (410) in an interchangeable way and that operate in different ultrasound wave power and amplitude ranges depending on the type of ultrasound insert (210, 310),
the appliance being **characterized in that** it includes a correspondence table (235, 407, 504) in which utilization power and amplitude ranges are recorded for each type of insert (210, 310), means for automatically recognizing the type of insert (210, 310) mounted on the handpiece (220, 320), and processing means for, in response to the recognition of the type of insert, automatically setting the ultrasound generator to the power and amplitude range adapted to the type of insert recognized by using said range extending between a lower limit and an upper limit defining respective minimum and maximum utilization power and amplitude values for the recognized insert (210, 310).

2. An appliance (200) according to claim 1, **characterized in that** it includes optical reader means for reading a code on the insert corresponding to the ultrasound wave power and amplitude range in which the insert (210) is designed to operate.

3. An appliance (200) according to claim 2, **characterized in that** it includes bar code reader means (212).

4. An appliance (300) according to claim 1, **characterized in that** it includes RF reader means (324) for reading a code stored in the insert, said code corresponding to the ultrasound wave power and amplitude range in which the insert (310) is designed to operate.

5. An appliance (300) according to claim 4, **characterized in that** it includes means (324) for reading RFID chips (312) .

6. An appliance (200) according to claim 1, **characterized in that** it includes means for sending an electronic measurement signal to the transducer (410, 510) that is mechanically coupled to an insert (210, 310), and means for measuring and analyzing the response signal from the transducer (410, 510), which response signal includes information corresponding to the ultrasound wave power and amplitude range in which the insert (210, 310) is designed to operate.

7. An appliance (200, 300) according to claim 6, **characterized in that** it includes a wobulator (401) for sending a measurement signal to the transducer at a determined frequency and processor means (405) for analyzing the response signal from the transducer so as to determine at least one of the following parameters of the response signal: its resonant frequency, phase, power, and impedance, with one or more of these parameters corresponding to the ultrasound wave power and amplitude range in which the insert (210, 310) coupled to the transducer (410, 510) is designed to operate.

8. An appliance (200, 300) according to claim 6 or claim 7, **characterized in that** it includes means (501) for sending a pulse signal to the transducer (510) and processor means (505) for analyzing the time response of the signal from the transducer (510), said time response signal corresponding to the ultrasound wave power and amplitude range in which the insert coupled to the transducer is designed to operate.
